# EUROPÄISCHE PATENTANMELDUNG

(11) **EP 2 156 772 A1**
(43) Veröffentlichungstag der Anmeldung: **24.02.2010**
(21) Anmeldenummer: 08162755.6
(22) Anmeldetag: 21.08.2008
(51) Int. Cl.: A47J 42/18

(54) **Mahlwerk zum Zerkleinern von Lebensmittelgut, insbesondere Kaffee**

(71) Anmelder: Mahlkönig GmbH & Co. KG, 22047 Hamburg (DE)
(72) Erfinder: Freund, Wolfgang, 22145 Hamburg (DE)
(74) Vertreter: Raffay & Fleck

(57) **Zusammenfassung**

Offenbart wird ein Mahlwerk zum Zerkleinern von Lebensmittelgut, insbesondere Kaffee, mit zwei einander unter Belassung eines Mahlspaltes in einem Gehäuse (4) gegenüberliegenden, Mahlscheiben (7, 8), von denen eine erste Mahlscheibe (7) in einem mit einer zentralen Drehachse (11) verbundenen Mahlscheibenträger (10) festgelegt und zusammen mit diesem zu einer Rotation relativ zu der zweiten Mahlscheibe (8) antreibbar ist, wobei der Mahlspalt zur Veränderung des Mahlgrades durch Verändern des Abstandes der Mahlscheiben (7, 8) zueinander einstellbar ist, welches Mahlwerk sich dadurch auszeichnet, dass die zentrale Drehachse (11) mit einem dem Mahlscheibenträger (10) gegenüberliegenden Abschnitt, vorzugsweise einem freien Ende (15), auf einem Hebelelement (20) aufliegt und dort gelagert ist, welches Hebelelement (20) einseitig ortsfest zu dem Gehäuse (4) gelenkig angelagert ist, und dass in einer von dieser gelenkigen Lagerung in Richtung einer Längserstreckung des Hebelelementes (20) beabstandeten Position ein Stellelement (21) zum Verändern der Hebelstellung an dem Hebelelement (20) angreift.

Mit einer solchen Ausgestaltung muss, wenn z.B. zu Wartungs- oder Reinigungszwecken das Mahlwerk geöffnet und hierzu bspw. ein Deckel mit der ortsfesten Mahlscheibe abgehoben werden muss, der Abstand und damit der Mahlgrad bei einem erneuten Zusammenfügen des Mahlwerkes nicht wieder neu eingestellt werden.

## Beschreibung

Die Erfindung betrifft ein Mahlwerk zum Zerkleinern von Lebensmittelgut, insbesondere Kaffee, gemäß dem Oberbegriff des Anspruchs 1.

Derartige Mahlwerke sind hinlänglich bekannt, sie werden u.a. auch von der Anmelderin selbst in vielfältiger Ausgestaltung hergestellt und entweder als einzelne Baueinheit zum Einrüsten in Lebensmittelmühlen, Kaffeemühlen oder auch Kaffeevollautomaten vertrieben oder aber weiterverarbeitet zur eigenen Produktion von Vorrichtungen zum Zerkleinern von Lebensmittelgut und anschließend als integraler und wesentlicher Bestandteil dieser Vorrichtung mit veräußert.

Es ist bekannt, dass bei Zerkleinerungsprozessen für Lebensmittelgut, z.B. beim Mahlen von Kaffee bzw. Kaffeebohnen der Zerkleinerungsgrad unterschiedlich gewünscht ist, so dass Möglichkeiten zum Verstellen eines gattungsgemäßen Mahlwerkes zum Anpassen des Zerkleinerungs- bzw. Mahlgrades vorzusehen sind. Typischerweise geschieht dies durch Einstellung eines zwischen den einander gegenüberliegen Mahlscheiben bestehendes Mahlspaltes, also Verändern des Abstandes zwischen den Mahlscheiben relativ zueinander. Ist dieser Abstand groß, so wird das Lebensmittelgut gröber vermahlen, wird dieser Abstand reduziert, ergibt sich ein feinerer Mahlgrad.

Bei heute bekannten Mahlwerken wird die Justage des Abstandes zwischen den Mahlscheiben und damit die Mahlgradverstellung in der Regel erreicht, indem in einem Gehäuse auf einer Abdeckseite eine ruhende Mahlscheibe gegenüber einer rotierenden Mahlscheibe im Abstand justiert wird durch einfaches Aufschrauben eines die stehende Mahlscheibe enthaltenden Deckels. Über den Grad der "Verschraubung" des Deckels gegenüber dem Gehäuse wird so der Abstand zwischen den Mahlscheiben und damit der Mahlgrad erstellt. Um eine Verstellmöglichkeit für einen Anwender zu schaffen, wird hier beispielsweise ein Hebel vorgesehen, der den Deckel gegenüber dem sonstigen Gehäuse in seiner Schraubenposition entweder weiter anzieht oder löst, und damit die Position der ortsfesten Mahlscheibe relativ zu der sich bewegenden Mahlscheibe verändert.

Auch wenn auf diese Art und Weise grundsätzlich eine geeignete und funktionierende Verstellbarkeit des Mahlgrades eines solchen Mahlwerkes erzielt und realisiert werden kann, bestehen hier dennoch Probleme, die mit der vorliegenden Erfindung adressiert werden sollen. So kommt es beispielsweise immer wieder vor, dass z.B. zu Wartungs- oder Reinigungszwecken das Mahlwerk geöffnet und hierzu der Deckel mit der ortsfesten Mahlscheibe abgehoben werden muss. Da hierzu die Verschraubung des Deckels, die zugleich für die Einstellung des Mahlgrades genutzt wird, gelöst werden muss, ergibt sich hierdurch zwangsläufig eine Auflösung des zuvor eingestellten Abstandes zwischen den Mahlscheiben und des so gewählten Mahlgrades. Dieser Abstand und damit der Mahlgrad muss bei einem erneuten Zusammenfügen des Mahlwerkes dann wieder neu eingestellt werden. Da z.B. bei Kaffeemühlen der Abstand zwischen den Mahlscheiben für das Erreichen eines akzeptablen Ergebnisses innerhalb eines bestimmten, eng gewählten Fensters liegen muss, ist hier beim Zusammenbau des zum Reinigen oder für Wartungszwecke geöffneten Mahlwerkes eine genaue Justage durch positionsgerechtes Anziehen der Verschraubung erforderlich, was letztlich nur durch einen Fachmann vorgenommen werden kann.

Hier soll mit der Erfindung Abhilfe geschaffen werden, indem ein Mahlwerk entwickelt wird, welches über eine Möglichkeit zur Verstellung des Abstandes zwischen den Mahlscheiben und damit des Mahlgrades verfügt, bei der eine Mahlgradvoreinstellung auch bei einem Öffnen des Gehäuses beibehalten werden kann.

Diese Aufgabe wird erfindungsgemäß gelöst durch ein Mahlwerk zum Zerkleinern von Lebensmittelgut, insbesondere Kaffee, mit den Merkmalen des Anspruches 1. Vorteilhafte Weiterbildungen eines solchen Mahlwerkes sind in den abhängigen Ansprüchen 2 bis 14 angegeben. In Anspruch 15 ist in einem weiteren Aspekt der Erfindung dann noch eine Vorrichtung zum Zerkleinern von Lebensmittelgut genannt, die ein wie nachstehend erläutertes, erfindungsgemäßes Mahlwerk enthält.

Die wesentlichen Idee der Erfindung besteht darin, anstelle wie im Stand der Technik eine stehende Mahlscheibe in axialer Richtung in ihrer Position einstellbar zu gestalten die rotierende Scheibe in axialer Richtung einer Drehachse positionsverstellbar zu gestalten. Hierzu kommt erfindungsgemäß ein Hebelelement zum Einsatz, welches mit einem Ende ortsfest relativ zum Gehäuse gelagert ist, mit einem anderen Ende an der Drehachse angreift, die dort gelagert ist. Dieser Angriff an der Drehachse kann prinzipiell an beliebiger Position der Drehachse erfolgen, wobei bevorzugt die Drehachse mit ihrem freien Ende auf dem Hebelelement auflagert. Das Hebelelement selbst ist in erfindungsgemäßer Weise dann wiederum mit einem Stellelementwerk verbunden, über welches die Schwenkposition des Hebelelementes verändert und somit die Drehachse verschoben und der Abstand zwischen den Mahlscheiben eingestellt werden kann.

Auf diese Weise ist es also möglich, die rotierende Mahlscheibe für die Abstandseinstellung zu bewegen, so dass eine z.B. ortsfest in einem Gehäusedeckel angelagerte Mahlscheibe zusammen mit dem Gehäusedeckel entnommen und das Mahlwerk so geöffnet werden kann, ohne dass bei einem anschließenden Verschließen des Mahlwerkes eine Neujustage des Mahlspaltes, also des Abstandes zwischen den beiden Mahlscheiben erforderlich wäre.

Grundsätzlich ist es dabei unerheblich, ob die rotierende, mit der Drehachse verbundene Mahlscheibe in Einbaulage des Mahlwerkes oberhalb oder unterhalb der weiteren Mahlscheibe angeordnet ist, wobei eine Anordnung unterhalb der Mahlscheibe derzeit bevorzugt wird.

Grundsätzlich ist es denkbar, die mit der Drehachse verbundene Mahlscheibe mit einer Feder oder einem vergleichbaren Element zu belasten und in Richtung einer Vergrößerung des Abstandes zwischen den beiden Mahlscheiben vorzuspannen und die Abstandseinstellung bei Verkleinerung des Abstandes gegen diese Federkraft vorzunehmen.

Allerdings werden die Mahlscheiben im Betrieb typischerweise allein aufgrund des im Mahlspalt befindlichen Lebensmittelgutes mit vergleichsweise hoher Kraft auseinander gedrückt, so dass die Anordnung einer gesonderten Feder bzw. eines anders gearteten Rückstellelementes nicht unbedingt erforderlich ist.

Für eine Führung und Lagerung der Drehachse unter Aufnahme seitlich wirkender Kräfte ist diese typischerweise in dem Gehäuse gelagert, bei bekannten Mahlwerken häufig in Kugellagern. Für eine reibungslose Funktion des erfindungsgemäßen Einstellmechanismus zum Verstellen des Abstandes zwischen den Mahlscheiben sollte ein solches Lager eine Längsverschiebung der Drehachse gestatten, wie dies z.B. bei einen Gleitlager der Fall ist (vgl. Anspruch 2).

Eine erste Möglichkeit, das Stellelement, welches zum Verschieben des Hebelelementes und damit zur Einstellung des Abstandes zwischen den Mahlscheiben an dem Hebelelement angreift, auszugestalten, besteht in einem in Längsrichtung der Drehachse geführten Kraftübertragungselement, welches an dem Hebelelement angreift (vgl. Anspruch 3). Dann ist noch ein Mittel zum Bewegen des Kraftübertragungselementes entlang im Wesentlichen der Längsrichtung der Drehachse vorzusehen, mit dem die Justage des Abstandes zwischen den Mahlscheiben und damit die Verstellung des Mahlgerades vorgenommen werden kann. Ein solches Mittel zum Bewegen des Kraftübertragungselementes kann z.B. einfach gebildet werden durch die Hindurchführung eines freien Endes des Kraftübertragungselementes durch eine ortsfest zum Gehäuse angeordnete Öffnung, wobei das freie Ende des Kraftübertragungselementes mit einem Außengewinde versehen und auf dieses auf der dem Hebelelement abgewandten Seite der Öffnung eine Schraubmutter aufgesetzt ist. Durch Anziehen der Mutter bzw. Lösen derselben wird das Kraftübertragungselement in Längsrichtung vor und zurück bewegt, so dass über das Hebelelement der Mahlspalt geschlossen bzw. geöffnet und so der Mahlgrad verstellt wird. Für ein einfaches Bedienen von außerhalb des Gehäuses kann an der Mutter ein entsprechender Hebel angeordnet und festgelegt werden, der das Gehäuse durchragt und über einen bestimmten Winkelbereich verdreht bzw. verschwenkt werden kann. So kann durch das entsprechende Verdrehen und Verschwenken des Gewindes bei geeigneter Wahl der Gewindesteigung und der Verhältnisse des Hebelelementes eine entsprechende Aufeinander- bzw. Auseinanderbewegung der Mahlscheiben zur Verstellung des Mahlspaltes in einem sinnvollen Bereich erreicht werden, um unterschiedliche gewünschte Mahlgerade einzustellen.

Eine andere und alternative Möglichkeit ein Stellelement bereitzustellen besteht darin, dass dieses eine über einen Stellhebel betätigbare, ortsfeste im Gehäuse gelagerte Schwenkachse aufweist die eine exzentrisch ausgeformte Wirkfläche hat, welche Wirkfläche an dem Hebelelement in der in Anspruch 5 genannten Weise angreift, bzw. auf dieses einwirkt. Beim Verdrehen der Schwenkachse wird das Hebelelement so nach oben gedrückt bzw. kann nach unten ausweichen, so dass auch hier eine Verstellung des Abstandes der Mahlscheiben und damit eine Einstellung des Mahlgrades möglich ist.

Um bei dieser Variante eine Unterteilung der Mahlgradeinstellung in eine grobe und eine feine Justierung zu erreichen, kann das Mahlwerk wie in Anspruch 6 angegeben ausgebildet sein. Demnach sind in dem Stellelement zwei Schwenkachsen verwirklicht, die in Längsrichtung ineinander geschoben sind und jeweils exzentrische Wirkflächen aufweisen. Die Wirkflächen dieser beiden Schwenkachsen bilden zusammen einen Wirkabschnitt in der Weise, dass bei Betätigen der äußeren Schwenkachse eine grobe und bei Betätigen der inneren Schwenkachse eine feine Abstandsjustierung erfolgt. Entsprechend sind an beiden Schwenkachsen jeweils ein eigener Stellhebel vorzusehen, die von außerhalb des Gehäuses des Mahlwerkes betätigt werden können, einer für die Grobjustierung, einer für die Feinjustierung.

In einer einfachsten Variante sind die exzentrischen Wirkflächen mit kreisabschnittförmiger Oberfläche gebildet. Um eine graduell unterschiedliche Einstellung des Abstandes der Mahlscheiben und damit des Mahlgrades vornehmen zu können, kann die eine bzw. können die Wirkfläche(n) auch in Form einer Kurvenscheibe gebildet sein (vgl. Anspruch 7).

Um für das Öffnen des Mahlwerkes und insbesondere ein anschließendes Verschließen eine exakte Positionierung der zweiten, der ersten mit der Drehachse ausgestatteten Mahlscheibe gegenüberliegenden Mahlscheibe sicherzustellen, kann das Mahlwerk wie in Anspruch 8 angegeben ausgerüstet sein. Der auf der planen Auflagefläche des um die erste Mahlscheibe herum gebildeten Gehäuseabschnitts aufliegende Rand der abnehmbaren Gehäusekappe, an der die zweite Mahlscheibe angeordnet ist, besorgt eine nach Abnehmen und beim Wiederzusammensetzen exakt gleiche Positionierung der zweiten Mahlscheibe hinsichtlich ihres axialen Abstandes zur ersten Mahlscheibe.

Um ein Öffnen und Verschließen des Mahlwerkes besonders einfach zu gestalten, kann dieses wie in Anspruch 9 angegeben mit einem Bajonettverschluss ausgerüstet sein. Die Ausgestaltung des Bajonettverschlusses in der Weise, dass die Gehäusekappe in geschlossenem Zustand gegen die plane Auflage gepresst wird, bietet eine zusätzliche Sicherheit hinsichtlich der exakten Positionierung der zweiten Mahlscheibe.

Um eine werksseitige Vormontage bzw. -einstellung des Abstandes zwischen den Mahlscheiben zu erleichtern, kann ein wie in Anspruch 10 näher bezeichnetes Keilelement vorgesehen sein. Dieses Keilelement wird zum Ausgleich von Fertigungstoleranzen bei der Montage des Mahlwerkes in eine korrekte Position eingestellt und dann relativ zu dem Hebelelement fixiert, so dass ein kleinster und größter mit dem Mahlwerk zu erzielender Mahlgrad (geringster und größter Abstand zwischen den Mahlscheiben) einer vorgegebenen Spanne entspricht. In der Praxis wird in einer Montageposition das Mahlwerk so eingestellt, dass die Mahlscheiben einander berühren und dann der Keil fixiert wird. Diese Position ist als "Nullposition" am einfachsten zu eichen bzw. zu erreichen. Natürlich können auch andere Arten der Nullposition gewählt werden, z.B. durch Einlegen von Distanzstücken zwischen die Mahlscheiben und "Auf-Berührung-Fahren" der beiden Mahlscheiben.

Auch wenn grundsätzlich die in der Erfindung verwirklichte Verstellmöglichkeit des Abstandes zwischen den Mahlscheiben auch bei einem Direktantrieb auf die Drehachse der zur Rotation anzutreibenden ersten Mahlscheibe verwirklicht werden kann, so ist jedoch ein Riemenantrieb mit den Merkmalen des Anspruches 12 vorzuziehen. Dieser hat den Vorteil, dass sich eine Längsverschiebbarkeit der Drehachse besonders leicht erreichen lässt, z.B. durch Ausgestaltung mit den Merkmalen des Anspruches 14. Zudem wird bei geschickter Lagerung der Drehachse, insbesondere bei einer Auflagerung des freien Endes der Drehachse in einer Lagerschale auf dem Hebelelement und einer zweiten Lagerung der Drehachse in einem Gleitlager relativ zu dem Gehäuse der Riemen des Riemenantriebes bei Anlaufen des Mahlwerkes automatisch gestrafft durch auftretende Seitenkräfte, die im Übrigen in den Lagerungen sicher abgefangen werden.

Weitere Vorteile und Merkmale eines erfindungsgemäßen Mahlwerkes ergeben sich aus der nachfolgenden Schilderung von Ausführungsbeispielen anhand der beigefügten Figuren. Dabei zeigen:
- Fig. 1: eine Ansicht eines erfindungsgemäßen Mahlwerkes in einer erster Ausgestaltungsvariante von vorn;
- Fig. 2: in einer schematischen dreidimensionalen Ansicht schräg von rechts vorn das Mahlwerk aus Fig. 2;
- Fig. 3: eine Schnittdarstellung eines Ausschnittes aus dem Mahlwerk gemäß Fig. 1 genommen entlang der Zeichnungsebene in Fig. 1;
- Fig. 4: ein Mahlwerk gemäß Fig. 1 in dreidimensionaler teilweise explosionsartiger Darstellung;
- Fig. 5: in einer Ansicht von vorn ein zweites Ausführungsbeispiel für ein erfindungsgemäßes Mahlwerk;
- Fig. 6: eine Schnittdarstellung durch das Mahlwerk in verglichen mit der Darstellung in Fig. 5 rückwärtigen Ansicht;
- Fig. 7: in einer Explosionsdarstellung ein zweites Ausführungsbeispiel für ein erfindungsgemäßes Mahlwerk;
- Fig. 8: eine Schnittansicht genommen von der Seite eines Ausschnittes des in Fig. 7 gezeigten Mahlwerkes;
- Fig. 9: in zwei Darstellungen a) und b) eine in beiden oben gezeigten Varianten eines erfindungsgemäßen Mahlwerkes verwendbare Baueinheit aus Mahlscheibe und Mahlscheibenträger mit daran angeformter Drehachse sowie Abstreiferring;
- Fig. 10: eine Explosionsdarstellung der in Fig. 9 gezeigten Baueinheit; und
- Fig. 11: in einer dreidimensionalen Ansicht ein Abschnitt des erfindungsgemäßen Mahlwerkes gemäß beider zuvor gezeigter Ausführungsbeispiele zur Verdeutlichung des Bajonettverschlusses am Gehäusedeckel.

Die Figuren sind rein schematische Darstellungen und insbesondere nicht maßstabsgerecht. Sie stellen insoweit keine vollständige Wiedergabe sämtlicher konstruktiver Details dar, sondern sollen lediglich der Erläuterung der erfindungswesentlichen Teile und Prinzipien dienen.

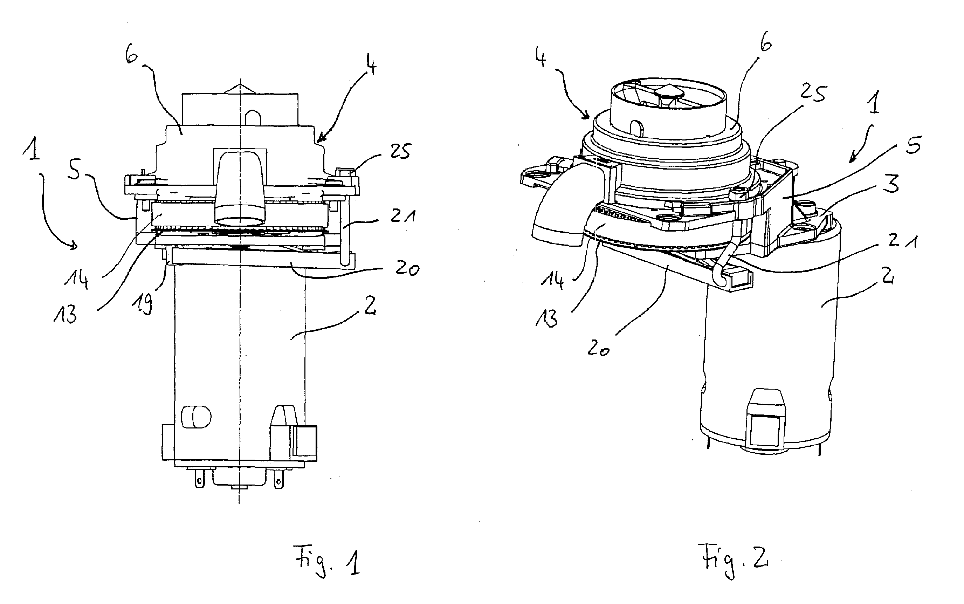

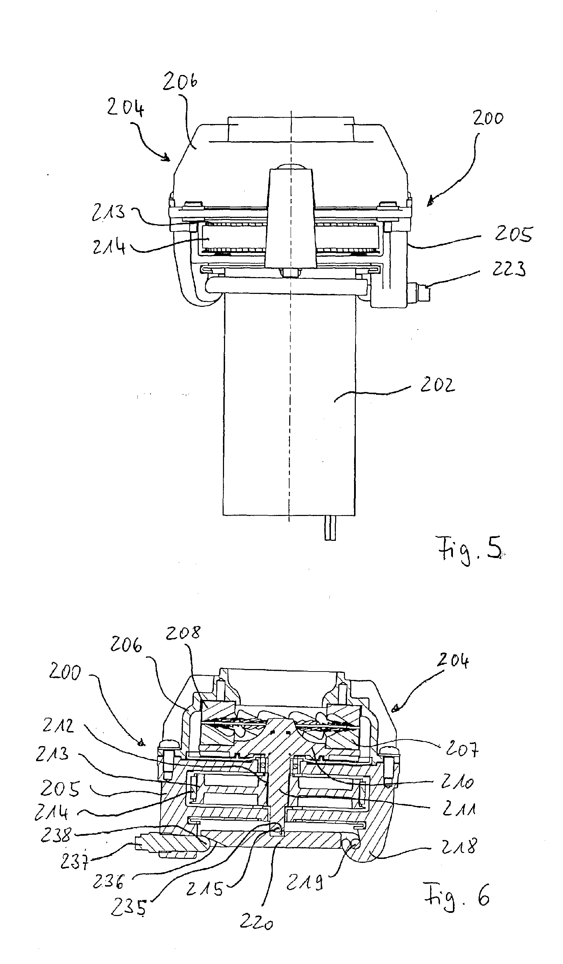

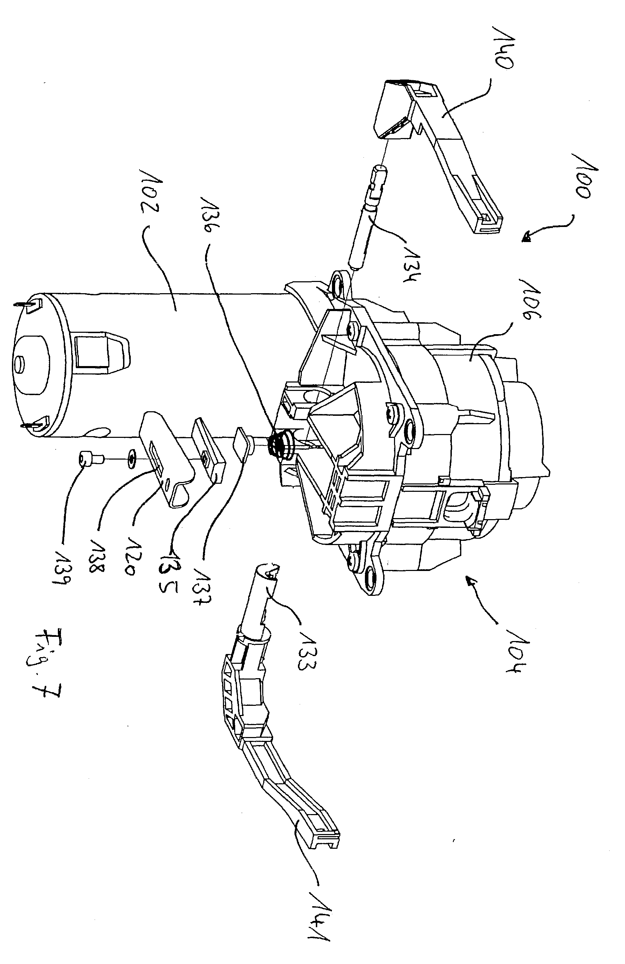

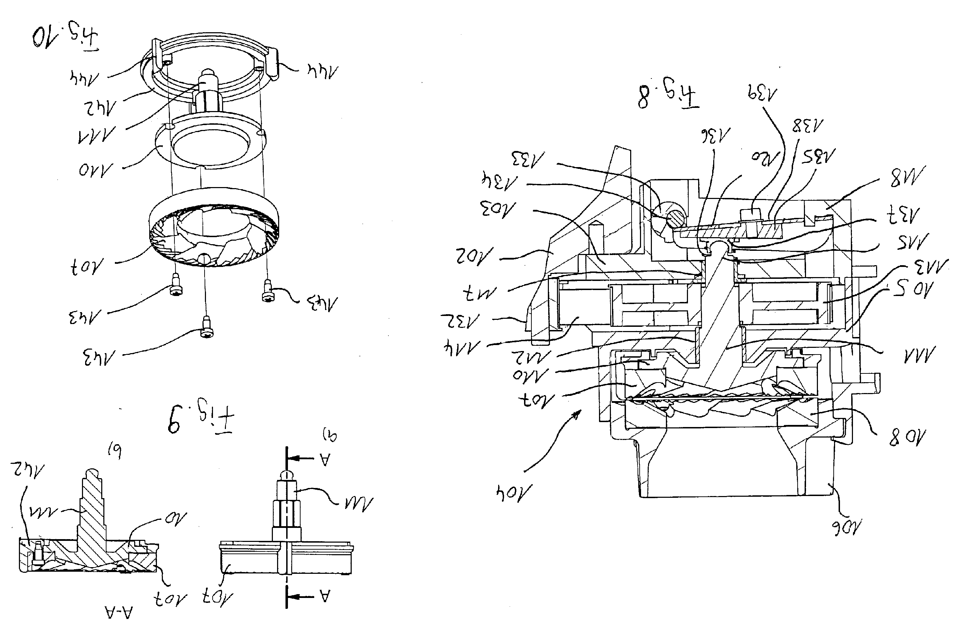

Nachfolgend werden drei mögliche Ausgestaltungsvarianten für ein erfindungsgemäßes Mahlwerk beschrieben, von denen eine erste Variante in den Figuren 1 bis 4, eine zweite Variante in den Figuren 5 und 6 und eine dritte Variante in den Figuren 7 und 8 gezeigt ist. Die Figuren 9 und 10 bzw. 11 zeigen Details, die allen drei in den oben genannten Figuren gezeigten und nachfolgend näher geschilderten Mahlwerken Verwendung finden und eingesetzt werden können.

In den Figuren 1 bis 4 ist in einem ersten Ausführungsbeispiel ein erfindungsgemäßes Mahlwerk 1 in unterschiedlichen Ansichten, teilweise als Detaildarstellung gezeigt. Das hier gezeigte Mahlwerk 1 ist insbesondere ausgelegt für das Zerkleinern von Kaffeebohnen zu gemahlenem Kaffee.

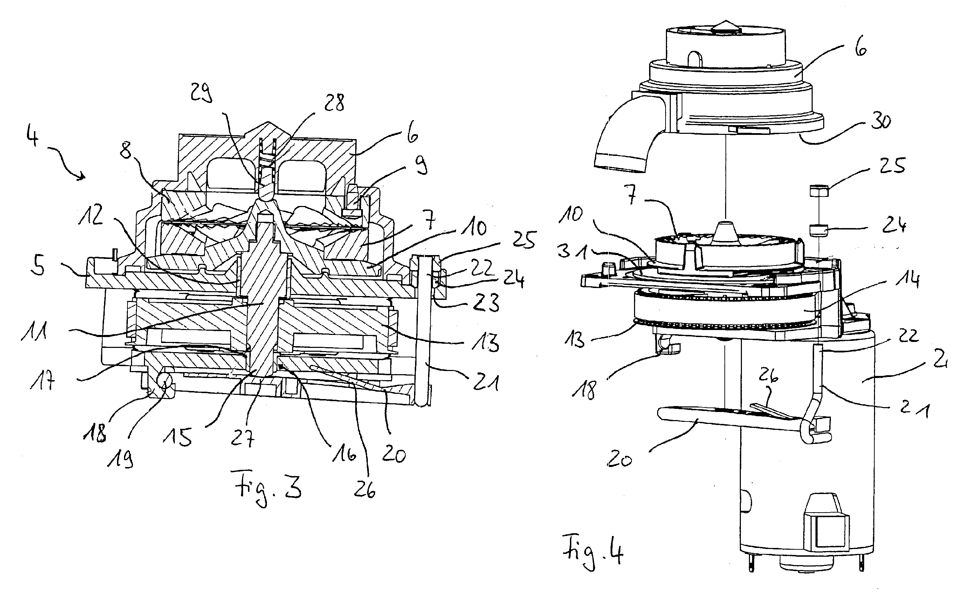

Das Mahlwerk 1 enthält zunächst einen Antrieb in Form eines in einem zylindrischen Gehäuse gekapselten Motors 2, ggf. mit einem daran angesetzten Getriebe. Über einen Anschlussflansch 3 ist als weitere wesentliche Komponente ein die Mahlwerkzeuge in Form von Mahlscheiben umfassendes Mahlgehäuse 4 mit dem Motor 2 verbunden, insbesondere verschraubt. Das Mahlgehäuse 4 ist unterteilt in ein Gehäuseunterteil 5 und einen abnehmbaren Gehäusedeckel 6 (vgl. Fig. 3). Innerhalb des Mahlgehäuses 4 sind die eigentlichen Mahlwerkzeuge in Form von zwei parallel angeordneten, übereinander geschichteten Mahlscheiben, einer unteren Mahlscheibe 7 und einer oberen Mahlscheibe 8 angeordnet. Die obere Mahlscheibe 8 ist über Schrauben 9 fest mit dem Gehäusedeckel 6 verbunden. Die untere Mahlscheibe 7 ruht hingegen auf einem Mahlscheibenträger 10, mit dem sie fest verbunden ist, z.B. verschraubt oder verpresst. Die Mahlscheiben 7,8 können dabei aus einem beliebigen geeigneten Material gefertigt sein, z.B. Stahl oder Keramik.

Der Mahlscheibenträger 10 ist mit einer zentralen Drehachse 11 fest verbunden, über die der Mahlscheibenträger 10 und damit die untere Mahlscheibe 7 zur Rotation angetrieben werden kann. Die Drehachse 11 ist zentral durch das Gehäuseunterteil 5 hindurchgeführt und dort mit einem Gleitlager 12 gelagert.

Unterhalb dieser Durchführung und innerhalb des Gehäuseunterteils 5 ist auf die Drehachse 11 eine Zahnscheibe 13 verdrehfest aufgesetzt, über die mittels eines Antriebsriemens, des Zahnriemens 14, von dem Motor 2 erzeugtes Drehmoment auf die Drehachse 11 und damit auf den Mahlscheibenträger 10 und die untere Mahlscheibe 7 übertragen werden kann.

Mit ihrem dem Mahlscheibenträger 10 gegenüberliegenden freien Ende 15 ist die Drehachse 11 in einer in eine weitere zentrale Durchführung 16 in einer unteren Ebene des unteren Gehäuseteils 5 eingesetzten Gleithülse 17 gelagert.

In einem an dem Gehäuseunterteil 5 ausgebildeten Haltehaken 18 ist mit einer Schwenkachse 19 ein Hebelelement 20 einseitig verschwenkbar befestigt bzw. angelagert. An dem der Schwenkachse 19 gegenüberliegenden freien Ende des Hebelelementes 20 greift in gelenkiger Weise ein Stangenelement 21 mit einem freien, umgebogenen Ende an. Dieses Stangenelement 21 ist an seinem gegenüberliegenden Ende 22 mit Gewindezügen versehen, auf die eine Mutter 25, z.B. eine M6-Mutter, aufgeschraubt werden kann. Mit diesem Ende 22 ist das Stangenelement 21 durch eine Öffnung 23 im Gehäuseunterteil 5 hindurchgeführt. Über das freie Ende 22 ist auf der dem Hebelelement 20 gegenüberliegenden Seite der Öffnung 23 zunächst ein Distanzstück 24 geführt und anschließend die Mutter 25 aufgeschraubt. Das Distanzstück 24 dient dabei auch einer gelenkigen Anlagerung des freien Endes 22, die erforderlich ist, da das Stangenelement 21 bei der nachfolgend beschriebenen Verstellung des Mahlgrades Kippbewegungen ausführt.

An dem Hebelelement 20 ist schließlich noch ein Federelement in Form einer einstückig gebildeten Blattfeder 26, die gegen das Gehäuseunterteil 5 drückt bzw. an diesem anliegt, angebracht.

Wie besonders gut in Fig. 3 zu erkennen ist, drückt das Hebelelement 20 in einem Auflagebereich 27 auf das freie Ende 15 der Drehachse 11, so dass ein Verschwenken des Hebelelementes 20 um die Schwenkachse 19 eine Auf- bzw. Abbewegung der Drehachse 11 in axialer Richtung und damit ein Zustellen bzw. Entfernen der unteren Mahlscheibe 7 zu bzw. von der oberen Mahlscheibe 8 erfolgen kann. Damit wird letztlich der Abstand zwischen den Mahlscheiben 7 und 8 beeinflusst und kann so eingestellt werden, mit dem Abstand letztlich auch der Mahlgrad.

Ein solches Verschwenken des Hebelelementes 20 wird bei dem in den Figuren 1 bis 4 gezeigten Ausführungsbeispiel durch Anziehen bzw. Lösen der Mutter 25 erreicht. Wird die Mutter 25 angezogen, so wird das freie Ende 22 des Stangenelementes 21 in Richtung des Gehäusedeckels 6 gezogen, das Hebelelement 20 wird in dieselbe Richtung gedrückt und die Drehachse 11 und damit der Mahlscheibenträger 10 und die untere Mahlscheibe 7 bewegen sich in axialer Richtung der Drehachse 11 auf die obere Mahlscheibe 8 zu, der Mahlgrad wird feiner. Wird die Mutter 25 hingegen gelöst, erhält das Hebelelement 20 Spielraum, sich von dem Gehäuseunterteil 5 wegzuverschwenken und wird durch die Blattfeder 26 auch in diese Richtung gedrückt. Damit kann die Drehachse 11 nach unten ausweichen und mit ihr der Mahlscheibenträger 10 und die untere Mahlscheibe 7. So wird der Abstand zwischen den Mahlscheiben 7 und 8 vergrößert, es ergibt sich ein gröberer Mahlgrad.

Grundsätzlich genügt beim Zerkleinern von Kaffee der zwischen den Mahlscheiben entstehende Druck bzw. die Kraft der dort eingepressten, zu zerkleinernden Kaffeebohnen, um die untere Mahlscheibe 7 in Richtung des Hebelelementes 20 zu drücken und bei einem Lösen der Mutter 25 eine Öffnung des Mahlspaltes zu bewirken.

Diese Wirkung kann bei Bedarf zusätzlich unterstützt werden durch Federkraft, wie hier durch den im Gehäusedeckel 6 mittig gelagerten, von einer Schraubenfeder 28 in Richtung des Hebelelementes 20 vorgespannten Druckbolzen 29, der auf dem Mahlscheibenträger auflastet und diesen in Richtung des Hebelelementes 20 drückt.

In einer Einbausituation, also bei einem z.B. in einer Kaffeemühle eingebauten Mahlwerk der in den Figuren 1 bis 4 gezeigten Ausgestaltung wird an der Mutter 25 ein entsprechendes Hebelelement befestigt, welches das Gehäuse der Maschine durchragt und durch Verschwenken die Mutter 25 festzieht bzw. löst und somit eine Verstellung des Abstandes zwischen den Mahlscheiben 7 und 8 und damit eine Einstellung des Mahlgrades in der oben beschriebenen Weise bewirkt.

Es ist aus der obigen Beschreibung leicht zu erkennen, dass bei dem hier gezeigten Ausführungsbeispiel der Gehäusedeckel 6 einfach entnommen werden kann, ohne dass die Justierung für die Einstellung des Mahlgrades, die unabhängig vom Gehäusedeckel 6 erfolgt, verändert werden muss. Entsprechend muss bei einem erneuten Aufsetzen des Gehäusedeckels 6 der Mahlgrad auch nicht wieder neu justiert werden. Vielmehr wird der Mahlgrad bzw. ein Fenster von sinnvollen bzw. anwendbaren Mahlgraden bei der Herstellung bzw. bei dem Zusammenbau des erfindungsgemäßen Mahlwerkes einmal voreingestellt durch das Spannen der Mutter 25, bis eine gewünschte Position der unteren Mahlscheibe 7 bzw. ein vorbestimmter Abstand zwischen dieser unteren Mahlscheibe 7 und der oberen Mahlscheibe 8 eingestellt ist. Diese Vorjustierung muss dann auch bei einem Öffnen des Mahlwerkes 1 durch Abheben des Gehäusedeckels 6 nicht mehr neu eingestellt werden.

Damit der Gehäusedeckel 6 nach einem Öffnen in einer exakten Position, insbesondere dem axialen Abstand und der parallelen Ausrichtung der oberen Mahlscheibe 8 wieder am Gehäuseunterteil 4 festgelegt werden kann, ist der Gehäusedeckel mit einem Bajonettverschluss ausgerüstet. Beim Verschließen liegt der Gehäusedeckel 6 mit einem planen unteren Rand 30 auf einer ebenfalls planen Auflagefläche 31 auf und wird so in seiner Position exakt festgelegt. Mit der Position des Gehäusedeckels 6 ist dann auch die Position der darin fest verschraubten oberen Mahlscheibe 8 exakt bestimmt.

Der Antrieb der unteren Mahlscheibe 7 erfolgt, wie bereits oben erwähnt über einen Zahnriemen 14, der mit einer Ausgangswelle des Motors 2 verbunden ist. Der Antrieb ist somit ein Riemenantrieb. Diese Art des Antriebes hat den Vorteil, dass die Drehachse 11 auf einfache Weise in axialer Richtung verschoben werden kann, ohne hierfür entsprechend Einrichtungen bei einem Direktantrieb vorsehen zu müssen. Das Gleitlager 12 bzw. die Gleithülse 17 ermöglichen neben einer drehbaren Lagerung der Drehachse 11 eine axiale Verschiebung derselben.

In den Figuren 5 und 6 ist eine zweite Ausgestaltungsvariante eines erfindungsgemäßen Mahlwerkes 200 gezeigt, das ebenfalls bevorzugt zum Zerkleinern von Kaffeebohnen zu gemahlenem Kaffee eingesetzt wird. Das Mahlwerk 200 stimmt im wesentlichen Aufbau mit dem zuvor anhand der Figuren 1 bis 4 erläuterten Mahlwerk 1 überein. Insoweit wird hinsichtlich der allgemeinen Funktionsbeschreibung auf die vorstehende Beschreibung Bezug genommen. Das Mahlwerk 200 hat ebenfalls einen Motor 202 für den Antrieb. Es weist ein Gehäuse 204 auf mit einem Gehäuseunterteil 205 und einem Gehäusedeckel 206. In dem Gehäuse sind einander gegenüberliegend eine untere Mahlscheibe 207 und eine am Gehäusedeckel 206 festgelegt obere Mahlscheibe 208 angeordnet zwischen denen ein Mahlspalt belassen ist, in dem das zu zerkleinernde Lebensmittelgut zermahlen wird. Die untere Mahlscheibe 207 ist auf einem Mahlscheibenträger 210 befestigt, an dem eine Drehachse 211 angeformt ist. Diese Drehachse ist in dem Gehäuseunterteil 205 in einer Durchführung drehbar gelagert. Auf der Drehachse 211 ist drehfest, aber in axialer Richtung der Drehachse 211 in dem Gleitlager 212 verschiebbar eine Zahnscheibe 213 angeordnet, auf die der Antrieb des Motors 202 über den Zahnriemen 214 übertragen wird.

In diesen Gestaltungseinzelheiten stimmt das Mahlwerk 200 im Wesentlichen mit dem Mahlwerk 1 überein. Ferner ist auch bei dem Mahlwerk 200 ein einseitig verschwenkbar an dem Gehäuseunterteil 205 angelagertes Hebelelement 220 vorgesehen, auf dem die Drehachse 211 mit ihrem freien Ende 215 aufliegt. Das Hebelelement 220 ist auch hier mittels einer Schwenkachse 219, die in einem an dem Gehäuseunterteil 205 angeformten Haltehaken 218 gehalten ist, gelagert. Anders jedoch als bei dem zuvor beschriebenen Ausführungsbeispiel ruht das freie Ende 215 der Drehachse 211 hier in einer einfachen Vertiefung 235 des Hebelelementes 220 und nicht in einer wie bei dem Mahlwerk 1 vorgesehenen, in einer Öffnung eingesetzten Hülse.

Auch ist der Verstellmechanismus, mit dem der Mahlscheibenträger 210 und mit diesem die untere Mahlscheibe 207 auf die obere Mahlscheibe 208 zu oder von dieser wieder weg bewegt und so der Mahlgrad verstellt werden kann, ein anderer. Anstelle des Stangenelementes ist hier eine Verstellschraube 237 in Form einer Madenschraube mit einem abgerundeten Ende 238 vorgesehen. Mit dem abgerundeten Ende liegt die Verstellschraube 237 an einer auf der Unterseite des Hebelelementes 220 an dessen freien Ende ausgebildeten Abschrägung 236 an. Wird die Verstellschraube 237 in Richtung des Gehäuseinneren, also auf das Hebelelement 220 zu verschraubt, fährt das abgerundete Ende 238 weiter unter de Abschrägung 236 und drückt das Hebelelement 220 und mit diesem die mit ihrem freien Ende 215 darauf in der Vertiefung 220 aufgelagerte Drehachse 211 und so den Mahlscheibenträger 211 und die untere Mahlscheibe 207 in Richtung der oberen Mahlscheibe 208 nach oben, so dass der Mahlgrad feiner eingestellt wird. Analog wird bei einem Herausschrauben der Verstellschraube 237 aus dem Gehäuseunterteil 205 der Spalt zwischen der oberen Mahlscheibe 208 und der unteren Mahlscheibe 207 vergrößert und der Mahlgrad gröber eingestellt.

In den Figuren 7 und 8 ist schließlich eine dritte Ausgestaltungsvariante eines erfindungsgemäßen Mahlwerkes, wiederum zur bevorzugten Verwendung zum Zerkleinern von Kaffeebohnen zu gemahlenem Kaffee, gezeigt und mit 100 bezeichnet.

Dieses Mahlwerk hat einen prinzipiell gleich aufgebauten und arbeitenden Verstellmechanismus zum Einstellen des Mahlgrades wie das zuvor beschriebene Mahlwerk 1, der nachfolgend kurz beschrieben werden soll.

Das Mahlwerk 100 enthält ebenfalls einen Antrieb in Form eines in einem zylindrischen Gehäuse untergebrachten Motors 102, an dem über einen Anschlussflansch 103 ein Mahlgehäuse 104 befestigt ist. Das Mahlgehäuse 104 setzt sich zusammen aus einem Gehäuseunterteil 105 und einem Gehäusedeckel 106. In dem Gehäuseunterteil ist eine untere Mahlscheibe 107 angeordnet, die obere Mahlscheibe 108 ist fest mit dem Gehäusedeckel 106 verbunden, z.B. verschraubt. Die untere Mahlscheibe 107 sitzt fest auf einem Mahlscheibenträger 110, der fest verbunden ist mit einer Drehachse 111, in diesem Falle einstückig mit dieser ausgebildet. Die Drehachse 111 ist wie im zuvor beschriebenen Ausführungsbeispiel durch zentrale Durchführungen in dem Gehäuseunterteil 5 hindurchgeführt und dort in einem Gleitlager 112 bzw. mit ihrem freien Ende 115 in einer Gleithülse 117 gelagert. Zwischen dem Gleitlager 112 und der Gleithülse 117 ist auf einem Abschnitt der Drehachse 111 eine Zahnscheibe 113 drehfest-aufgebracht, zur Übertragung des von dem Motor 102 erzeugten Drehmomentes von einem Ausgangszahnkranz 132 über einen Zahnriemen 114 auf die Drehachse 111.

An einem an dem Gehäuseunterteil 105 ausgebildeten, mit diesem fest verbundenen Haltehaken 118 ist ein erstes Ende eines Hebelelementes 120 schwenkbar angelagert. An dem dem Haltehaken 118 gegenüberliegenden freien Ende liegt das Hebelelement 120 auf einer durch die Kombination von zwei ineinander geschobenen Exzenterwellen, einer äußeren Exzenterwelle 133 mit einer exzentrisch darin eingeschobenen inneren Exzenterwelle 134 auf.

Auf dem Hebelelement 120 liegt auf der dem freien Ende 115 der Drehachse 111 zugewandten Seite ein Keilelement 135 auf mit einer darauf gleitend aufgelegten und von einer Feder 136 in Position gehaltenen Lagerbuchse 137. Das Keilelement 135 kann auf dem Hebelelement 120 in dessen Längsrichtung verschoben werden und gleitet dabei unter der Lagerbuchse 137 hindurch. Zum Festlegen des Keilelementes 120 dient eine durch ein in dem Hebelelement 120 ausgebildetes Langloch 138 geführte Schraube 139.

Wie bereits oben ausgeführt, arbeitet das im zweiten Ausführungsbeispiel in den Figuren 7 und 8 gezeigte Mahlwerk 100 grundsätzlich nach einem gleichartigen Verstellprinzip. Auch hier ist das Hebelelement 120 bzw. dessen Betätigung bzw. Verschwenken in Richtung des Gehäuseunterteils 105 bzw. von diesem weg für ein Anheben bzw. Absenken der darauf aufgelagerten Drehachse 111 und damit der mit dieser fest verbundenen unteren Mahlscheibe 107 verantwortlich. Durch diese Auf- und Abbewegung der unteren Mahlscheibe 107 wird der Mahlspalt zwischen den Mahlscheiben 107 und 108 vergrößert bzw. verkleinert und damit der Mahlgrad gröber oder feiner eingestellt.

Anders als bei dem zuvor beschriebenen Ausführungsbeispiel, bei dem die Verstellung des Hebelelementes 20 über ein Anziehen bzw. Lösen der Mutter 25 am freien Ende 22 des Stangenelementes 21 vollzogen wurde, bewirkt hier ein Verdrehen der äußeren bzw. inneren Exzenterwelle 133, 134 ein Verschieben des Auflagepunktes des dem Haltehaken 118 gegenüberliegenden Endes des Hebelelementes 120 und damit die oben diskutierte axiale Bewegung der Drehachse 111. Um eine solche Verdrehung der Exzenterwellen vornehmen zu können, sind auf deren Enden Betätigungshebel 140 für die innere Exzenterwelle 134 und 141 für die äußere Exzenterwelle 133 aufgesetzt. Die beiden Exzenterwellen 133 und 134 sind für eine unterschiedliche Verstellung des Mahlgrades verantwortlich. Wird die äußere Exzenterwelle 133 verdreht, wird der Mahlgrad grob verstellt, eine Feineinstellung erfolgt mittels der inneren Exzenterwelle 134.

Für die Voreinstellung des Mahlgradbereiches bei der Montage (also für einen Toleranzausgleich der einzelnen Komponenten) wird das Keilelement 135 genutzt. Durch Verschieben des Keilelementes 135 in einer Richtung entweder in Fig. 8 nach rechts oder nach links wird die Drehachse 111 und mit ihr der Mahlscheibenträger 110 und die untere Mahlscheibe 107 in der Figur nach oben bzw. nach unten bewegt, so dass eine gewünschte Position dieser Mahlscheibe bzw. ein bei der Montage zu erzielender Abstand der unteren Mahlscheibe 107 zur oberen Mahlscheibe 108 voreingestellt werden kann. Nach erfolgte Voreinstellung und Montage wird das Keilelement 135 mit der Schraube 139 in dem Langloch 138 fixiert und muss nicht mehr verändert werden.

Auch bei diesem Ausführungsbeispiel ist der Gehäusedeckel 106 für Wartungs- und/oder Reinigungsarbeiten einfach abnehmbar, ohne dass hierdurch eine Verstellung des Mahlgrades erfolgt bzw. eine Neujustage desselben erforderlich wäre. Auch hier wird der Verschluss des Gehäusedeckels 106 bzw. die Verriegelung desselben gegenüber dem Gehäuseunterteil 105 durch einen Bajonettverschluss gewährleistet, wobei auch hier einander gegenüberliegende plane Flächen am Rand des Gehäuses 106 bzw. in einer Auflagefläche auf dem Gehäuseunterteil 105 für eine reproduzierbare und sicher ausgerichtete Auflagerung des Gehäusedeckels 106 und damit Positionierung der oberen Mahlscheibe 108 Sorge tragen.

In den Figuren 9 und 10 ist am Beispiel des Mahlscheibenträgers 110 gezeigt, wie eine Baueinheit aus Mahlscheibe 107 und Mahlscheibenträger 110 unter Einbindung eines Abstreiferringes 142 gefertigt werden kann. Der Abstreiferring 142 mit insgesamt drei Abstreifern 144 ist über Schrauben 143 fest mit dem Mahlscheibenträger 110 und der Mahlscheibe 107 verbunden. Die Schrauben 143 werden hierzu durch Öffnungen in der Mahlscheibe 107 und entsprechende Ausnehmungen in dem Mahlscheibenträger 110 bis in Aufnahmen in dem Abstreiferring 142 geführt. Durch diese Führung der Schrauben insbesondere durch die Ausnehmungen in dem Mahlscheibenträger 110 wird eine winkelfeste Arretierung und Positionierung erreicht, so dass das Drehmoment, das über die hier nicht gezeigte Zahnscheibe auf die Drehachse 111 übertragen wird sicher weitergegeben auf die untere Mahlscheibe 107.

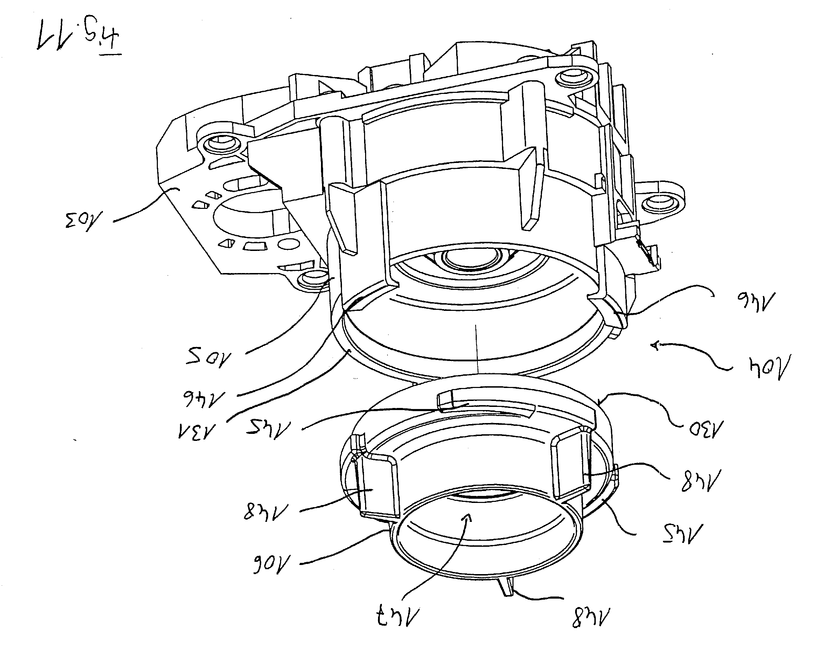

In Fig. 11 schließlich ist noch einmal in einer Explosionsdarstellung nur das Gehäuse 104 aus dem zweiten Ausführungsbeispiel dargestellt mit dem fest mit dem Anschlussflansch 103 verbundenen Gehäuseunterteil 105 und dem Gehäusedeckel 106. Besonders gut zu erkennen ist hier das Prinzip des Bajonettverschlusses, wobei der Gehäusedeckel 106 mit Andruckabschnitten 145 unter Niederhalter 146 gedrückt wird. Mit einem planen unteren Rand 130 liegt im verschlossenen Zustand der Gehäusedeckel 106 auf der planen Auflagefläche 131 auf dem Gehäuseunterteil 105 in reproduzierbarer Position auf, so dass nach einem Öffnen des Gehäuses 104 die Position der in dem Gehäusedeckel 106 fest montierten oberen Mahlscheibe 108 exakt eingehalten und wieder erreicht wird und so die Mahlgradverstellung durch ein Öffnen des Gehäusedeckels 106 nicht beeinträchtigt ist.

Zu erkennen ist in dieser Darstellung auch eine an sich bekannte zentrale Öffnung 147 in dem Gehäusedeckel 106 zum Einbringen von Mahlgut, insbesondere Kaffeebohnen in das Innere des Mahlwerkes zwischen die Mahlscheiben 107 und 108.

Schließlich sind auch Rippen 148 zu erkennen, die zum Ergreifen für ein Festziehen bzw. Lösen des Bajonettverschlusses und damit des Gehäusedeckels 106 von dem Gehäuseunterteil 105 vorgesehen sind.

Es dürfte deutlich sein, dass die in den Figuren 9 und 10 bzw. 11 gezeigten Prinzipdarstellungen, auch wenn sie exemplarisch anhand der Baugruppen für das im dritten Ausführungsbeispiel gezeigte Mahlwerk 100 dargestellt sind, in gleicher Weise auch bei einem Mahlwerk 1 gemäß dem ersten Ausführungsbeispiel oder einem Mahlwerk 200 nach dem zweiten Ausführungsbeispiel Verwendung finden können, ggf. geringfügig konstruktiv geändert bzw. angepasst.

Die gezeigten Ausführungsbeispiele dienen allein der Beschreibung und sollen den Schutzumfang der Erfindung nicht beschränken.

### Bezugszeichenliste

- 1: Mahlwerk
- 2: Motor
- 3: Anschlussflansch
- 4: Mahlgehäuse
- 5: Gehäuseunterteil
- 6: Gehäusedeckel
- 7: untere Mahlscheibe
- 8: obere Mahlscheibe
- 9: Schraube
- 10: Mahlscheibenträger
- 11: Drehachse
- 12: Gleitlager
- 13: Zahnscheibe
- 14: Zahnriemen
- 15: freies Ende
- 16: zentrale Durchführung
- 17: Gleithülse
- 18: Haltehaken
- 19: Schwenkachse
- 20: Hebelelement
- 21: Stangenelement
- 22: Ende
- 23: Öffnung
- 24: Distanzstück
- 25: Mutter
- 26: Blattfeder
- 27: Auflagebereich
- 28: Schraubenfeder
- 29: Druckbolzen
- 30: unterer Rand
- 31: Auflagefläche
- 100: Mahlwerk
- 102: Motor
- 103: Anschlussflansch
- 104: Mahlgehäuse
- 105: Gehäuseunterteil
- 106: Gehäusedeckel
- 107: untere Mahlscheibe
- 108: obere Mahlscheibe
- 110: Mahlscheibenträger
- 111: Drehachse
- 112: Gleitlager
- 113: Zahnscheibe
- 114: Zahnriemen
- 115: freies Ende
- 117: Gleithülse
- 118: Haltehakten
- 120: Hebelelement
- 130: unterer Rand
- 131: Auflagefläche
- 132: Ausgangszahnkranz
- 133: äußere Exzenterwelle
- 134: innere Exzenterwelle
- 135: Keilelement
- 136: Feder
- 137: Lagerbuchse
- 138: Langloch
- 139: Schraube
- 140: Betätigungshebel
- 141: Betätigungshebel
- 142: Abstreiferring
- 143: Schraube
- 144: Abstreifer
- 145: Andruckabschnitt
- 146: Niederhalter
- 147: zentrale Öffnung
- 148: Rippe
- 200: Mahlwerk
- 202: Motor
- 204: Mahlgehäuse
- 205: Gehäuseunterteil
- 206: Gehäusedeckel
- 207: untere Mahlscheibe
- 208: obere Mahlscheibe
- 210: Mahlscheibenträger
- 211: Drehachse
- 212: Gleitlager
- 213: Zahnscheibe
- 214: Zahnriemen
- 215: freies Ende
- 218: Haltehaken
- 219: Schwenkachse
- 220: Hebelelement
- 235: Vertiefung
- 236: Abschrägung
- 237: Stellschraube
- 238: abgerundetes Ende

## Patentansprüche

1. Mahlwerk zum Zerkleinern von Lebensmittelgut, insbesondere Kaffee, mit zwei einander unter Belassung eines Mahlspaltes in einem Gehäuse (4; 104; 204) gegenüberliegenden, Mahlscheiben (7, 8; 107, 108; 207, 208), von denen eine erste Mahlscheibe (7; 107; 207) in einem mit einer zentralen Drehachse (11; 111; 211) verbundenen Mahlscheibenträger (10; 110; 210) festgelegt und zusammen mit diesem zu einer Rotation relativ zu der zweiten Mahlscheibe (8; 108; 208) antreibbar ist, wobei der Mahlspalt zur Veränderung des Mahlgrades durch Verändern des Abstandes der Mahlscheiben (7, 8; 107, 108; 207, 208) zueinander einstellbar ist, **dadurch gekennzeichnet, dass** die zentrale Drehachse (11; 111; 211) mit einem dem Mahlscheibenträger (10; 110; 210) gegenüberliegenden Abschnitt, vorzugsweise einem freien Ende (15; 115; 215), auf einem Hebelelement (20; 120; 220) aufliegt und dort gelagert ist, welches Hebelelement (20; 120; 220) einseitig ortsfest zu dem Gehäuse (4; 104; 204) gelenkig angelagert ist, und dass in einer von dieser gelenkigen Lagerung in Richtung einer Längserstreckung des Hebelelementes (20; 120; 220) beabstandeten Position ein Stellelement (21; 133, 134; 237) zum Verändern der Hebelstellung an dem Hebelelement (20; 120; 220) angreift.

2. Mahlwerk nach Anspruch 1, **dadurch gekennzeichnet, dass** die Drehachse (11; 111; 211) zur Rotation in einem Lager (12, 17; 112, 117) gelagert ist, welches eine Längsverschiebung der Drehachse (11; 111; 211) gestattet, vorzugsweise in einem Gleitlager.

3. Mahlwerk nach einem der vorhergehenden Ansprüche, **dadurch gekennzeichnet, dass** das Stellelement ein an dem Hebelelement (20) angreifender, im wesentlichen in Längsrichtung der Drehachse geführtes Kraftübertragungselement (21) ist, welches Mittel zum Bewegen desselben entlang im Wesentlichen der Längsrichtung der Drehachse (11) aufweist.

4. Mahlwerk nach Anspruch 3, **dadurch gekennzeichnet, dass** die Mittel zum Bewegen des Kraftübertragungselementes (21) eine ortsfest zu dem Gehäuse gebildete Öffnung (23), durch die das dem Hebelelement (20) abgewandte Ende (22) des Kraftübertragungselementes (21) hindurchgeführt ist, ein in diesem dort durchgeführten Ende des Kraftübertragungselementes (21) ausgebildetes Gewinde und eine auf der dem Hebelelement (20) abgewandten Seite auf der Öffnung (23) auf das Gewinde am Ende (22) des Kraftübertragungselementes (21) aufgeschraubte Mutter (25) umfasst.

5. Mahlwerk nach einem der Ansprüche 1 oder 2, **dadurch gekennzeichnet, dass** das Stellelement wenigstens eine über einen Stellhebel (140, 141) betätigbare, ortsfest zu dem Gehäuse (104) gelagerte Schwenkachse (133, 134) aufweist mit einer exzentrisch ausgeformten Wirkfläche und dass die Wirkfläche an einer in Längsrichtung des Hebelelementes (120) von der gelenkigen Lagerung entfernten Stelle auf der der Auflagerung der Drehachse (111) gegenüberliegenden Seite des Hebelelementes (120) auf letzteres einwirkt zum Verschwenken des Hebelelementes (120).

6. Mahlwerk nach Anspruch 5, **dadurch gekennzeichnet, dass** zwei Schwenkachsen (133, 134) mit exzentrischen Wirkflächen vorgesehen sind, welche Schwenkachsen (133, 134) ineinander geschoben sind und mit ihren Wirkflächen in der Weise einen gemeinsamen Wirkabschnitt bilden, dass durch Betätigen der äußeren Schwenkachse (133) eine grobe, durch Betätigen der inneren Schwenkachse (134) eine feine Abstandsjustierung vorgenommen werden kann.

7. Mahlwerk nach einem der Ansprüche 5 oder 6, **dadurch gekennzeichnet, dass** die Wirkfläche(n) in Form einer Kurvenscheibe gebildet ist/sind.

8. Mahlwerk nach einem der vorhergehenden Ansprüche, **dadurch gekennzeichnet, dass** die zweite Mahlscheibe (8; 108; 208) relativ zu dem Gehäuse (4; 104; 204) ruht und in einer abnehmbaren Gehäusekappe (6; 106; 206) angeordnet ist, die einen Rand (30; 130) aufweist, der in einem zusammengebauten Zustand auf einer planen Auflage (31; 131) eines um die erste Mahlscheibe (7; 107; 207) herum gebildeten Gehäuseabschnittes (5; 105; 205) aufliegt.

9. Mahlwerk nach Anspruch 8, **dadurch gekennzeichnet, dass** die Gehäusekappe (6; 106; 206) mit dem Gehäuseabschnitt (5; 105; 205) über einen Bajonettverschluss verbindbar ist, welcher in geschlossenem Zustand den Rand (30; 130) der Gehäusekappe (6; 106; 206) gegen die plane Auflage (31; 131) presst.

10. Mahlwerk nach einem der vorhergehenden Ansprüche, **dadurch gekennzeichnet, dass** zwischen der Lagerung (112, 117) der Drehachse (111) und der dieser zugewandten Oberfläche des Hebelelementes (120) ein in Längsrichtung des Hebelelementes (120) verschiebbares und in seiner Position festlegbares Keilelement (135) angeordnet ist.

11. Mahlwerk nach einem der vorhergehenden Ansprüche, **dadurch gekennzeichnet, dass** die erste Mahlscheibe (7; 107; 207) eine untere, im wesentlichen horizontal ausgerichtete Mahlscheibe ist, oberhalb derer die zweite, ebenfalls im Wesentlichen horizontal ausgerichtete Mahlscheibe (8; 108; 208) angeordnet ist.

12. Mahlwerk nach einem der vorhergehenden Ansprüche, **dadurch gekennzeichnet, dass** es einen Riemenantrieb aufweist mit einem Antriebsmotor (2; 102; 202) und gegebenenfalls einem Getriebe mit einer kraftausgangsseitig angeordneten ersten Riemenscheibe (132) und einer zweiten, mit der Drehachse (11; 111; 211) verbundenen Riemenscheibe (13; 113; 213).

13. Mahlwerk nach Anspruch 12, **dadurch gekennzeichnet, dass** die zweite Riemenscheibe (13; 113; 213) auf der Drehachse (11; 111; 211) verschiebbar gelagert ist.

14. Mahlwerk nach einem der vorhergehenden Ansprüche, **dadurch gekennzeichnet, dass** die erste Mahlscheibe (107) auf dem Mahlscheibenträger (110) zusammen mit einem separaten Abstreiferring (142) zu einer festen Einheit montiert ist.

15. Vorrichtung zum Zerkleinern von Lebensmittelgut, insbesondere Kaffee, mit einem Mahlwerk (1; 100; 200) nach einem der vorhergehenden Ansprüche.
